# EUROPÄISCHE PATENTSCHRIFT

(11) **EP 0 619 671 B1**
(45) Veröffentlichungstag und Bekanntmachung des Hinweises auf die Patenterteilung: **14.01.1998**
(21) Anmeldenummer: 94110587.6
(22) Anmeldetag: 30.10.1990
(51) Int. Cl.: H04N 1/32, H04N 1/00

(54) **Gerät zum Senden und Empfangen von über Fernübertragungswege zu übertragenden Bilddokumenten**
Device for sending and receiving graphical documents via teletransmission lines
Dispositif pour émettre et recevoir des documents graphiques via des lignes de télétransmission

(30) Priorität: 03.11.1989 DE 3936684
(43) Veröffentlichungstag der Anmeldung: 12.10.1994
(62) Teilanmeldung aus: 90916468.3
(73) Patentinhaber: Siemens Nixdorf Informationssysteme AG, 33106 Paderborn (DE)
(72) Erfinder: Baitz, Günther, D-13503 Berlin (DE); Burchart, Joachim, D-33189 Schlangen (DE); Malke, Wolfgang, D-13465 Berlin (DE)
(74) Vertreter: Fuchs, Franz-Josef, Dr.-Ing.

(56) Entgegenhaltungen:
- EP-A- 0 175 385
- EP-A- 0 262 603
- GB-A- 2 184 913

## Beschreibung

Die Erfindung betrifft ein Gerät zum Senden und Empfangen von über Fernübertragungswege zu übertragenden Bilddokumenten.

Derartige Geräte werden beispielsweise im Telefaxdienst eingesetzt, bei welchem die Fernübertragungswege durch das Telefonnetz gebildet sind (Fernkopierer).

Die bekannten Geräte, wie z.B. GB-A-2 184 913 oder EP-A-262 603, erlauben auch einen direkten Nachdruck eines Bilddokunentes durch den internen Drucker.

Das Gerät gemäß der Erfindung umfaßt die in Anspruch 1 definierten Merkmale.

Ausgestaltungen der Erfindung ergeben sich aus den weiteren Patentansprüchen, der Zeichnung und der Zeichnungsbeschreibung. Es zeigen:
- Fig. 1: in perspektivischer Darstellung und in einer Ansicht von schräg vorne ein Gerät gemäß der Erfindung;
- Fig. 2: ein Blockschaltbild eines Gerätes gemäß Fig. 1.

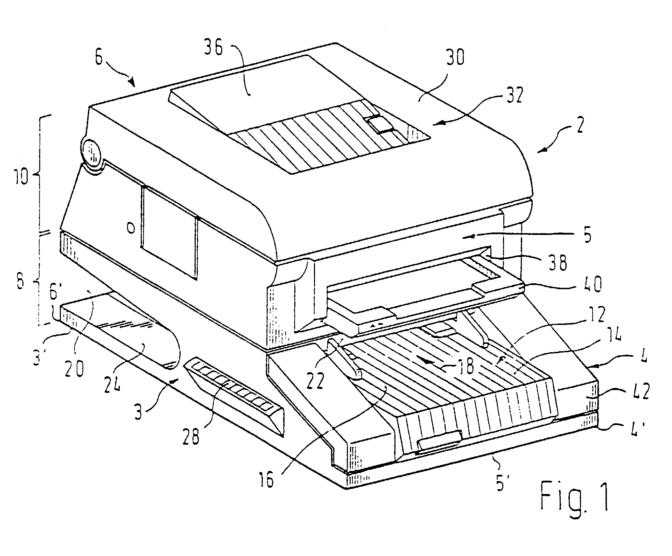

Das in Fig. 1 dargestellte Gerät 2 hat einen im wesentlichen rechteckigen Grundriß. Um die folgende Beschreibung zu erleichtern, sei die der Seite 3' zugeordnete Geräteseite als Vorderseite 3, die der Grundrißseite 4' zugeordnete Geräteseite als Rückseite 4 und die den Grundrißseiten 5' bzw. 6' zugeordneten Geräteseiten als rechte Seite 5 bzw. linke Seite 6 bezeichnet.

Das Gerät setzt sich aus einem unteren Fußbereich 8 und einem oberen Kopfbereich 10 zusammen. Wie Fig. 1 erkennen läßt, springt der Kopfbereich 10 an der Geräteseite 5 gegenüber dem Fußbereich 8 nach Art einer Stufe zurück, wobei die Oberseite 12 dieser Stufe eine Auflagefläche 14 für die Bildvorlagen bildet.

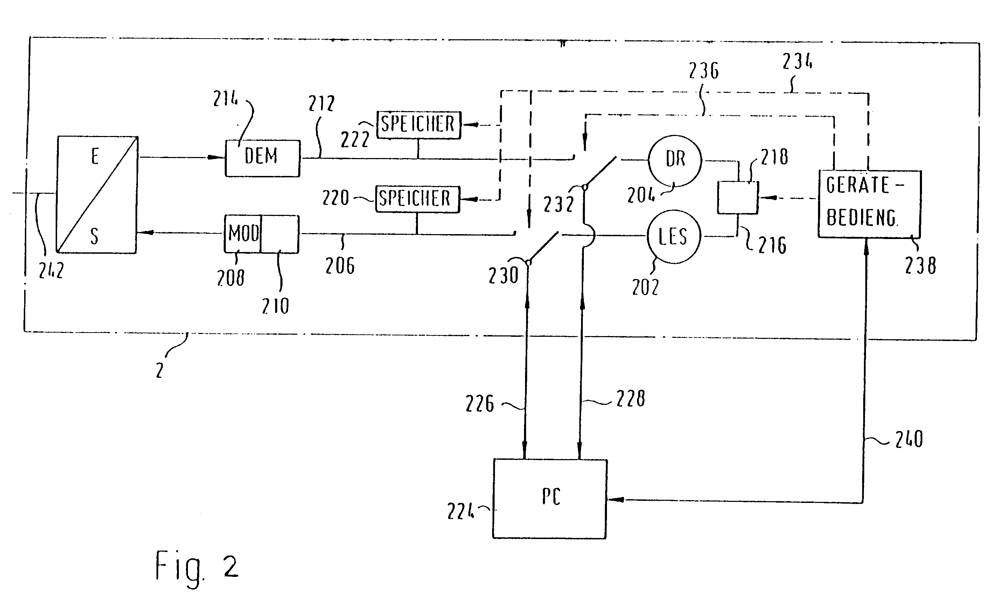

Die Auflagefläche 14 bildet demnach die Eingabestation 16 des Gerätes. In diese Eingabestation 16 eingelegte Einzelblatt-Bildvorlagen werden in der durch den Pfeil 18 bezeichneten Transportrichtung entlang einer in Fig. 1 nicht dargestellten Lesevorrichtung zu der im Bereich der linken Geräteseite 6 befindlichen Entnahmestation 20 befördert, wo sie entnommen werden können (siehe auch Fig. 4 und 5). Die Bildvorlagen treten in das Gerät durch eine Eingabeöffnung 22 ein, die an dem dem Gerät zugewandten Ende der Auflagefläche 14 ausgebildet ist. Die Entnahmestation 20 hat eine im Winkel von 90° zur Transportrichtung 18 gerichtete Entnahmeöffnung 24 und eine in Transportrichtung 18 gerichtete Entnahmeöffnung 26 (siehe auch Fig. 2).

An der Vorderseite 3 ist ein Bedien- und Anzeigefeld 28 vorgesehen.

Im Kopfbereich 10, und zwar auf dessen Oberseite 30 ist die Ausgabestation 32 für die Druckbilder angeordnet. Die Druckbilder verlassen das Gerätegehäuse durch eine Ausgabeöffnung 34 und werden auf einer gegenüber der Oberseite 30 leicht schräggestellten Ablagefläche 36 abgelegt, wo sie entnomnen werden können.

Fig. 2 zeigt ein Blockschaltbild für ein Gerät etwa gemäß Fig. 1. Das Gerät ist als Ganzes wiederum mit 2 bezeichnet. Es besitzt eine Lesevorrichtung 202 und einen Drucker 204. Die Leseeinrichtung ist über eine Leitung 206 mit einer Modulatoreinrichtung 208 verbunden, welcher die von der Lesevorrichtung 202 aufgenommenen Bildpunktsignale in an sich bekannter Weise in für den Sender S verwertbare Signale umwandelt. Dem Modulator 208 ist eine spezielle Einrichtung 210 zugeordnet, welche die hochwertige Auflösungsnorm des Lesegerätes 202 in die für die Fernübertragung festgelegte Auflösungsnorm umwandelt.

Der Drucker 204 ist über eine Leitung 212 mit einem Demodulator 214 verbunden. Der Demodulator wandelt die aus dem Empfänger E kommenden Signale in für den Drukker 204 verwertbare Signale um.

Die Lesevorrichtung 202 und der Drucker 204 sind über eine Leitung 216 direkt miteinander verbunden; in der Leitung 216 ist eine Einrichtung 218 angeordnet, die die von der Lesevorrichtung ausgehenden Bildpunktsignale in für den Drucker verwertbare Bildpunktsignale umwandelt, ohne dabei die hohe Auflösungsqualität des Lesegerätes 202 zu verändern. Dadurch kann das Gerät 2 Kopien hoher Qualität herstellen, so daß es als Bürokopierer verwendbar ist.

Der Leitung 206 ist ein erster Speicher 220 zugeordnet, in welchem über diese Leitung 206 übertragene Daten gespeichert werden können. Entsprechend ist der Leitung 212 ein Speicher 222 zugeordnet, in welchem die Leitung 212 passierende Daten gespeichert werden können.

Eine externe EDV-Anlage, beispielsweise der PC 224, weist zwei Verbindungsleitungen 226, 228 auf, deren erste mit der Leitung 206 über einen Schalter 230 verbindbar ist und deren zweite über einen Schalter 232 mit der Leitung 212 verbindbar ist.

Die Schalter 230 bzw. 232 sind über zugeordnete Steuerleitungen 234 bzw. 236 über eine Gerätebedienungstafel 238 einzeln ansteuerbar. Die Gerätebedienungstafel 238 kann über eine weitere Verbindungsleitung 240 mit dem PC 224 verbunden sein.

Die dargestellte Schaltung ermöglicht es, im PC erstellte Daten direkt über die Leitungen 226 und den Schalter 230 in die Leitung 206 und zum Sender S zu senden. Ebenso können über den Empfänger eingehende Daten über die Leitung 212, den Schalter 232 und die Leitung 228 in den PC geladen werden.

Weiter ist die Möglichkeit gegeben, von der Lesevorrichtung 202 aufgenommene Daten über den Schalter 230 und die Leitung 226 in den PC einzuspeisen. Über die Leitung 228 und den Schalter 232 kann außerdem vom PC direkt der Drucker 204 angesteuert werden.

Der Speicher 220 erlaubt es, vom PC 224 oder von der Lesevorrichtung 202 kommende Daten zu speichern, während gleichzeitig über den Empfänger E Daten eingehen; wenn die von der Empfänger/Sendereinheit ausgehende Fernübertragungsleitung 242 wieder frei ist, können die Daten aus dem Speicher 220 über den Sender S gesendet werden. Andererseits können während eines Sendevorganges im Empfänger eingehende Daten im Speicher 222 abgelegt werden, wenn der Drucker 204 durch einen internen Kopiervorgang belegt ist; nach Freiwerden des Druckers 204 können dann die im Speicher 222 abgelegten Daten durch den Drucker 204 ausgedruckt werden.

## Patentansprüche

1. Gerät zum Senden und Empfangen von über Fernübertragungswege zu übertragenden Bilddokumenten, umfassend:
eine Lesevorrichtung (202) zum Abtasten einer Bildvorlage und zur Abgabe von Bildpunkten entsprechenden elektrischen Signalen auf einer ersten Leitung (206), die mit einem Sendemodul (S) einer Empfänger-/Sendereinheit (E/S) verbunden ist, an der eine Fernübertragungsleitung (242) angeschlossen ist,
einen Drucker (204), der über eine zweite Leitung (212) mit einem Empfängermodul (E) der Empfänger-/Sendereinheit (E/S) und über eine dritte Leitung (216) mit der Lesevorrichtung (202) verbunden ist und von dem Empfängermodul (E) und der Lesevorrichtung (202) zu druckende Daten empfangen kann,
einen ersten Speicher (220) und einen zweiten Speicher (222), die mit der ersten Leitung (206) bzw. der zweiten Leitung (212) verbunden sind,
einen ersten Schalter (230) und einen zweiten Schalter (232), die in die erste Leitung (206) bzw. die zweite Leitung (212) eingeschaltet sind,
und eine Gerätebedienung (238), die auf die Speicher (220, 222) und die Schalter (230, 232) einwirkt, so daß entweder
a) der erste Speicher (220) Daten speichert, die von der Lesevorrichtung (202) erzeugt werden und auf der ersten Leitung (206) ankommen, während gleichzeitig unter Belegung der Fernübertragungsleitung (242) Daten vom Empfängermodul (E) über die zweite Leitung (212) empfangen werden, und wobei nach Abschluß des Empfangs der Daten vom Empfängermodul (E) und Freigabe der Fernübertragungsleitung (242) die im ersten Speicher (220) gespeicherten Daten über die erste Leitung (206) und den Sendermodul (S) über die Fernübertragungsleitung (242) ausgesendet werden,
oder
b) der zweite Speicher (222) Daten speichert, die während eines Sendevorganges über die Fernübertragungsleitung (242) beim Empfängermodul (E) ankommen und auf die zweite Leitung (212) geleitet werden, während der Drucker (204) belegt ist, und wobei nach Freiwerden des Druckers (204) die im zweiten Speicher (222) gespeicherten Daten dem Drucker (204) über die zweite Leitung (212) zugeführt und ausgedruckt werden.

2. Gerät nach Anspruch 1, dadurch **gekennzeichnet**, daß eine externe EDV-Anlage (224) eine vierte Verbindungsleitung (226) und eine fünfte Verbindungsleitung (228) hat, die mit der ersten Verbindungsleitung (206) über den ersten Schalter (230) bzw. mit der zweiten Leitung (212) über den zweiten Schalter (232) verbindbar sind.

3. Gerät nach Anspruch 2, dadurch **gekennzeichnet**, daß in der EDV-Anlage (224) enthaltene Daten über die erste Verbindungsleitung (226) und den ersten Schalter (230) zum Sendemodul (S) übertragbar sind.

4. Gerät nach Anspruch 2 oder 3, dadurch **gekennzeichnet**, daß über das Empfängermodul (E) eingehende Daten über die zweite Leitung (212), den zweiten Schalter (232) und die zweite Verbindungsleitung (228) zur EDV-Anlage (224) übertragbar sind.

5. Gerät nach einem der Ansprüche 2 bis 4, dadurch **gekennzeichnet**, daß von der Lesevorrichtung (202) erzeugte Daten über den ersten Schalter (230) und die erste Verbindungsleitung (226) zur EDV-Anlage (224) übertragbar sind.

6. Gerät nach einem der vorhergehenden Ansprüche 2 bis 5, dadurch **gekennzeichnet**, daß Daten der EDV-Anlage (224) über die zweite Verbindungsleitung (228) und den zweiten Schalter (232) in den Drucker (204) übertragbar sind.

7. Gerät nach einem der vorhergehenden Ansprüche, dadurch **gekennzeichnet**, daß in die dritte Leitung (216) zwischen der Lesevorrichtung (202) und dem Drucker (204) eine Einrichtung (218) geschaltet ist, die die von der Lesevorrichtung (202) ausgehenden Bildpunktsignale in für den Drucker (204) verwertbare Bildpunktsignale umwandelt, ohne dabei die hohe Auflösungsqualität der Lesevorrichtung (202) zu verändern.

8. Gerät nach Anspruch 7, dadurch **gekennzeichnet**, daß die Gerätebedienung (238) auch auf die Einrichtung (218) steuernd einwirken kann.

9. Gerät nach einem der vorhergehenden Ansprüche, dadurch **gekennzeichnet**, daß die Schalter (230, 232) durch die Gerätebedienung (238) einzeln steuerbar sind.

## Claims

1. Device for sending and receiving graphical documents to be transmitted via teletransmission lines, comprising:
a reading device (202) for scanning a graphical original and for outputting electrical signals corresponding to image points on a first line (206) which is connected to a transmitting module (S) of a receiver/transmitter unit (E/S), to which a teletransmission line (242) is connected,
a printer (204), which is connected via a second line (212) to a receiver module (E) of the receiver/transmitter unit (E/S) and via a third line (216) to the reading device (202), and can receive data to be printed from the receiver module (E) and the reading device (202),
a first memory (220) and a second memory (222), which are connected to the first line (206) and the second line (212) respectively,
a first switch (230) and a second switch (232), which are connected into the first line (206) and the second line (212) respectively,
and a device operating system (238), which acts on the memories (220, 222) and the switches (230, 232),
with the result that either
a) the first memory (220) stores data which are generated by the reading device (202) and arrive on the first line (206), while at the same time, occupying the teletransmission line (242), data are received from the receiver module (E) via the second line (212), and after completing the reception of the data from the receiver module (E) and releasing the teletransmission line (242), the data stored in the first memory (220) being transmitted via the teletransmission line (242) via the first line (206) and the transmitter module (S),
or
b) the second memory (222) stores data which arrive at the receiver module (E) via the teletransmission line (242) during a transmission operation, and are led onto the second line (212), while the printer (204) is occupied, and after the printer (204) becomes free, the data stored in the second memory (222) being fed to the printer (204) via the second line (212) and printed out.

2. Device according to Claim 1, characterized in that an external EDP system (224) has a fourth connecting line (226) and a fifth connecting line (228), which can be connected to the first connecting line (206) via the first switch (230) or, respectively, to the second line (212) via the second switch (232).

3. Device according to Claim 2, characterized in that data contained in the EDP system (224) can be transmitted to the transmitting module (S) via the first connecting line (226) and the first switch (230).

4. Device according to Claim 2 or 3, characterized in that data incoming via the receiver module (E) can be transmitted to the EDP system (224) via the second line (212), the second switch (232) and the second connecting line (228).

5. Device according to one of Claims 2 to 4, characterized in that data generated by the reading device (202) can be transmitted to the EDP system (224) via the first switch (230) and the first connecting line (226).

6. Device according to one of the preceding Claims 2 to 5, characterized in that data can be transmitted from the EDP system (224) into the printer (204) via the second connecting line (228) and the second switch (232).

7. Device according to one of the preceding claims, characterized in that there is connected into the third line (216) between the reading device (202) and the printer (204) a device (218) which converts image point signals outgoing from the reading device (202) into image point signals which can be used for the printer (204), without at the same time changing the high resolution quality of the reading device (202).

8. Device according to Claim 7, characterized in that the device operating system (238) can also act in a controlling manner on the device (218).

9. Device according to one of the preceding claims, characterized in that the switches (230, 232) can be controlled individually by the device operating system (238).

## Revendications

1. Appareil pour émettre et recevoir des documents graphiques devant être transmis par l'intermédiaire de voies de télétransmission, comprenant:
un dispositif de lecture (202), destiné à balayer un original et à fournir des signaux électriques correspondant à des points d'image à une première ligne (206) qui est reliée à un module (S) d'émission d'une unité (E/S) récepteur/émetteur à laquelle est raccordée une ligne de télétransmission (242),
une imprimante (204) qui est reliée par l'intermédiaire d'une deuxième ligne (212) à un module (E) récepteur de l'unité (E/S) récepteur/émetteur et par une troisième ligne (216) au dispositif de lecture (202) et qui peut recevoir des données à imprimer du module (E) récepteur et du dispositif de lecture (202),
une première mémoire (220) et une deuxième mémoire (222) qui sont reliées à la première ligne (206) et respectivement à la deuxième ligne (212),
un premier commutateur (230) et un deuxième commutateur (232) qui sont montés respectivement dans la première ligne (206) et dans la deuxième ligne (212)
et un tableau de commande (238) de l'appareil qui agit sur les mémoires (220,222) et les commutateurs (230,232) de sorte que ou bien
a) la première mémoire (220) mémorise des données qui sont produites par le dispositif de lecture (202) et qui arrivent sur la première ligne (206), tandis que simultanément par occupation de la ligne de télétransmission (242) des données sont reçues du module (E) récepteur par la deuxième ligne (212) et après arrêt de la réception des données par le module (E) récepteur et libération de la ligne de télétransmission (242), les données mémorisées dans la première mémoire (220) sont envoyées par la première ligne (206) et le module (S) émetteur par la ligne de télétransmission (242),
ou bien
b) la deuxième mémoire (222) mémorise les données, qui arrivent pendant une opération d'émission par la ligne de télétransmission (242) au module (E) récepteur et les envoie à la deuxième ligne (212) tant que l'imprimante (204) est occupée et, après libération de l'imprimante (204), les données mémorisées dans la deuxième mémoire (222) sont envoyées à l'imprimante (204) par la deuxième ligne (212) et sont imprimées.

2. Appareil suivant la revendication 1, caractérisé en ce qu'une installation électronique externe de traitement de données (224) a une quatrième ligne de liaison (226) et une cinquième ligne de liaison (228) qui peuvent être reliées à la première ligne de liaison (206) par le premier commutateur (230) ou à la deuxième ligne de liaison (212) par le deuxième commutateur (232).

3. Appareil suivant la revendication 2, caractérisé en ce que des données contenues dans l'installation électronique externe de traitement de données (224) peuvent être transférées au module (S) émetteur par la première ligne de liaison (226) et par le premier commutateur (230).

4. Appareil suivant la revendication 2 ou 3, caractérisé en ce que des données entrant par le module (E) récepteur peuvent être transférées à l'installation électronique externe de traitement de données (224) par la deuxième ligne (212), le deuxième commutateur (232) et la deuxième ligne de liaison (228).

5. Appareil suivant l'une des revendications 1 à 4, caractérisé en ce que des données produites par le dispositif de lecture (202) peuvent être transférées à l'installation électronique externe de traitement de données (224) par le premier commutateur (230) et par la première ligne de liaison (226).

6. Appareil suivant l'une des revendications précédentes 2 à 5, caractérisé en ce que des données de l'installation électronique externe de traitement de données (224) peuvent être transférées à l'imprimante (204) par la deuxième ligne de liaison (228) et par le deuxième commutateur (232).

7. Appareil suivant l'une des revendications précédentes, caractérisé en ce qu'il est monté dans la troisième ligne (216) entre le dispositif de lecture (202) et l'imprimante (204) un dispositif (218) qui transforme les signaux de points d'image provenant du dispositif de lecture (202) en des signaux de points d'image pouvant être utilisés pour l'imprimante (204) sans modifier pour autant la grande qualité de résolution du dispositif de lecture (202).

8. Appareil suivant la revendication 7, caractérisé en ce que le tableau de commande (238) peut commander le dispositif (218).

9. Appareil suivant l'une des revendications précédentes, caractérisé en ce que les commutateurs (230,232) peuvent être commandés individuellement par le tableau de commande (238).
